# EUROPÄISCHE PATENTANMELDUNG

(11) **EP 2 551 002 A1**
(43) Veröffentlichungstag der Anmeldung: **30.01.2013**
(21) Anmeldenummer: 11175812.4
(22) Anmeldetag: 28.07.2011
(51) Int. Cl.: B01D 17/02, B01D 19/00

(54) **Phasentrennung eines Mehrphasengemisches**

(71) Anmelder: SIEMENS AKTIENGESELLSCHAFT, 80333 München (DE)
(72) Erfinder: Peuker, Urs, Pr., 09599 Freiberg (DE)

(57) **Zusammenfassung**

Die Erfindung betrifft eine Vorrichtung und ein Verfahren zur Phasentrennung eines Mehrphasengemisches (22) mit zumindest einer Gas- (7) und mindestens zwei Flüssigkeitsphasen (8, 9).

Die Vorrichtung (1) zur Phasentrennung weist einen Reaktor (2) auf, welcher einen tangentialen Einlauf (5) aufweist, über welchem das Mehrphasengemisch (22) dem Reaktor (2) zuführbar ist. Weiter weist der Reaktor (2) einen vertikal oberhalb des Einlaufs (5) angeordneten Gasabzug (3) auf, über welchem eine aus dem Mehrphasengemisch (22) abgetrennte Gasphase (7) des Mehrphasengemisches (22) aus dem Reaktor (2) abführbar ist. Ferner weist der Reaktor (2) mindestens zwei vertikal unterhalb des Einlaufs (5), in unterschiedlichen vertikalen Höhen angeordnete Abführungen (11, 12) auf, über welche jeweils eine der mindestens zwei aus dem Mehrphasengemisch (22) abgetrennte Flüssigkeitsphasen (8, 9) des Mehrphasengemisches (22) aus dem Reaktor (2) abführbar ist.

Bei dem Verfahren zur Phasentrennung eines Mehrphasengemisches (22) wird das Mehrphasengemisch (22) in eine aufwärtsgerichtete Wirbelströmung (13) versetzt, wobei bei Durchströmung (19) von aufwärtsgerichteten Wirbeln (17) der Wirbelströmung (13) Flüssigkeitströpfchen (18) aus dem Mehrphasengasgemisch (22) ausgeschieden werden und dabei die getrennte Gasphase (7) des Mehrphasengemisches (22) ausgebildet wird. Die Flüssigkeitströpfchen (18) werden gesammelt, wobei sich bei den gesammelten Flüssigkeitströpfchen (18) unter Schwerkrafteinfluss eine erste und eine zweite Flüssigkeitsphase (8, 9) ausbilden. Alle gebildeten Phasen (7, 8, 9) werden getrennt voneinander abgeführt, wodurch das Mehrphasengemisch (22) getrennt wird.

## Beschreibung

Die Erfindung betrifft eine Vorrichtung und ein Verfahren zur Phasentrennung eines Mehrphasengemisches.

Mehrphasengemische, d.h. Gemische aus verschiedenen Phasen, wie Flüssigkeits- und/oder Gasphasen, beispielsweise ein Dreiphasengemisch aus einer Gas- und zwei Flüssigphasen, sind bekannt.

Beispielsweise tritt ein solches Dreiphasengemisch als Kuchenbildungs-, Wasch- und Entfeuchtungsfiltrat bei einem kontinuierlichen Dampf-(Druck-)Filterapparat bei dortiger gleichzeitiger Waschung und Dampf-(Druck-)Filtration auf.

Ein solcher kontinuierlicher Dampf-(Druck-)Filterapparat ist beispielsweise in
"Scale-Up und Betrieb eines Dampf-Druckfilters im Pilotmaßstab", U.A. Peuker, W. Stahl, Chemie Ingenieur Technik, Vol. 73, No. 2, Seiten 64-68 (2001); "Steam Pressure Filtration: Mechanical-Thermal Dewatering Process", U.A. Peuker, W. Stahl, Drying Technology, 19(5), Seiten 807-848 (2001);
"Scale Up of Steam Pressure Filtration of Mineral Products", U.A. Peuker, W. Stahl, Proc. VIII Int. Proc. Symposium, 16.-18. October 2000, Antalya, Turkey;
"Applying mechanical-thermal filtration processes for purification, e.g. solvent removal", U. A. Peuker, Proc. Filtech Europe, 12.-23. Oktober 2003, Düsseldorf, Deutschland; "Abtrennung von organischen Lösemitteln aus Filterkuchen mit Dampf", U.A. Peuker, F & S Filtrieren und Separieren, Jahrgang 17 (2003), Nr. 5, Seiten 230-236;
beschrieben.

Wird die Fragestellung einer gleichzeitigen Waschung und Dampf-(Druck-)Filtration durch einen solchen kontinuierlichen Dampf-(Druck-)Filterapparat betrachtet, bei der zwei nichtmischbare Flüssigkeiten zum Einsatz kommen, wird sich diese Flüssigkeitsmischung auch im Filtrat wiederfinden. Eine Quelle der nicht-mischbaren Flüssigkeiten sind Mutterflüssigkeit bzw. Mutterfiltrat, Waschflüssigkeit und Kondensat.

Es ist hier weiter zu erwarten, dass es zu einem Dreiphasengemisch - aus Mischung der zweiphasigen Flüssigkeitsmischung mit einer Gasphase - in einem Filtratabscheidesystem des Dampf-(Druck-)Filterapparats kommt, wo dieses Mehrphasengemisch wieder in die einzelnen Phasen, beispielsweise die beiden Flüssigkeiten und das Gas, getrennt wird.

Es sind ferner verschiedene solcher Filtratabscheidesysteme in Ausgestaltung als Separatoren zur Trennung von Filtraten bzw. Mehrphasengemischen bekannt.

In der GB 2 332 632 A und in der US 2009/0020467 A1 sind solche Separatoren zur Trennung eines Mehrphasengemisches aus mindestens zwei Flüssigkeitsphasen und einer Gasphase beschrieben. Diese Separatoren weisen jeweils einen zentralen Kessel auf, welchem das Mehrphasengemisch zugeführt wird. Innerhalb des Kessels werden die verschiedenen Phasen des Mehrphasengemisches getrennt und über verschieden positionierte Abzüge aus dem Kessel abgezogen.

Nachteilig bei solchen Separatoren ist, dass diese die zu trennenden Mehrphasengemische zum Teil nur ungenügend und/oder mit geringer Reinheit der getrennten Phasen trennen können.

Es ist Aufgabe der Erfindung, eine Vorrichtung und ein Verfahren zur Phasentrennung eines Mehrphasengemisches bereitzustellen, welche eine Phasentrennung bei hoher Reinheit der getrennten Phasen ermöglichen und welche einfach und kostengünstig zu realisieren sind sowie welche auf effiziente und effektive Weise die Phasentrennung von Mehrphasengemischen, insbesondere eines solchen mit zumindest drei gemischten Phasen, im Speziellen mit einer Gasphase und zumindest zwei Flüssigkeitsphasen, ermöglichen. Auch soll die Erfindung eine Trennung von hohen Volumenströmen von Mehrphasengemischen ermöglichen.

Die Aufgabe wird gelöst durch eine Vorrichtung und ein Verfahren zur Phasentrennung eines Mehrphasengemisches mit den Merkmalen gemäß dem jeweiligen unabhängigen Patentanspruch.

Als Mehrphasengemisch seien hier Phasengemische aus mindestens einer gasförmigen und zumindest zwei flüssigen Phasen verstanden.

Solche Mehrphasengemische, insbesondere diese Dreiphasengemische aus einer Gas- und zwei Flüssigkeitsphasen, können beispielsweise bei einer - kombinierten - Waschung und Dampf-(Druck-)Filtration von Ölsand als Kuchenbildungs-, Wasch- und Entfeuchtungsfiltrat, kurz im Folgenden auch nur Filtrat, entstehen.

Dabei, d.h. bei dieser kombinierten Waschung und Dampf-(Druck-)Filtration von Ölsand, kommen zwei nicht mischbare Flüssigkeiten zum Einsatz, die sich als Flüssigkeitsmischung im Filtrat wiederfinden. Eine Quelle dieser nicht mischbaren Flüssigkeiten sind Mutterflüssigkeit bzw. Mutterfiltrat, Waschflüssigkeit und Kondensat. Daraus resultiert dann das Dreiphasengemisch (Flüssigkeitsmischung-Gas-Gemisch) im Filtrat aus einem organischen Lösungsmittel mit Bitumen und einem - mit dem organischen Lösungsmittel mit Bitumen nicht mischbaren - Wasser (zusammen kurz Flüssigkeitsanteil) sowie aus Luft (Gasanteil).

Allerdings ist die Erfindung nicht auf diese speziellen Dreiphasengemische beschränkt, sondern kann für beliebige Mehrphasengemische mit mindestens einer Gas- und zumindest zwei - oder auch mehr - Flüssigkeitsphasen bzw. für deren Phasentrennung verwendet werden.

Die erfindungsgemäße Vorrichtung zur Phasentrennung eines Mehrphasengemisches weist einen Reaktor, insbesondere in Form eines sich in vertikaler Richtung erstreckenden, zylindrischen Behälters, mit entsprechend positioniertem Einlauf für das Mehrphasengemisch und entsprechend positionierten Abführungen zum Abzug jeweils einer getrennten Phase des Mehrphasengemisches, insbesondere - im Falle eines Dreiphasengemisches mit einer Gas- und zwei Flüssigkeitsphasen - zum Abzug der mindestens einen Gasphase und der zumindest zwei Flüssigkeitsphasen, auf.

Dieser Reaktor besitzt dazu erfindungsgemäß einen tangentialen Einlauf, insbesondere einen tangentialen (Einlauf-) Stutzen, über welchen das Mehrphasengemisch, d.h. das Gemisch aus Flüssigkeitsanteil und Gasanteil bzw. das Flüssigkeitsmischung-Gas-Gemisch, tangential in den Reaktor eintreten kann.

Dabei sei hier unter tangential bzw. tangentialem Eintritt bzw. auch tangentialem Austritt verstanden, dass das Mehrphasengemisch entlang einer Umfangskontur des Reaktors in diesen eintritt bzw. aus diesem austritt.

Weiter erfindungsgemäß besitzt der Reaktor zumindest drei Abführungen, über welche die getrennten Phasen des Mehrphasengemisches, d.h. die mindestens eine Gasphase und die zumindest zwei Flüssigkeitsphasen, getrennt abgeführt werden können.

In vertikaler Richtung oberhalb des tangentialen Einlaufs, insbesondere nahe oder unmittelbar an einem oberen Ende des Reaktors, weist der Reaktor erfindungsgemäß dazu eine erste von diesen Abführungen auf, nämlich einen Gasabzug, über welchen die - aus dem Mehrphasengasgemisch abgetrennte - gasförmige Phase des Mehrphasengemisches bzw. das - die Gasphase bildende - Gas aus dem Reaktor abgezogen werden kann.

Vorteilhaft kann dieser Gasabzug - entsprechend dem tangentialen Einlauf - auch als tangentialer Auslauf bzw. als tangentialer (Auslauf-)Stutzen ausbildet sein, um - insbesondere im Zusammenwirken mit dem tangentialen Einlauf - bei tangentialem Ein- und Auslauf eine definierte Wirbelströmung des in den Reaktor eingetretenen Mehrphasengemisches im Reaktor bzw. zwischen Einlauf und Gasabzug zu bewirken.

Durch die vorgesehene Positionierung des Mehrphasengemisch-Einlaufs und/oder des Gasabzugs, d.h. durch den vertikal oberhalb des tangentialen Eintritts positionierten, insbesondere tangential ausgebildeten, Gasabzug - anders ausgedrückt
- insbesondere durch den jeweiligen tangentialen Ein- bzw. Austritt in unterschiedlicher vertikaler Höhe bei dem Reaktor
- wird das Mehrphasengemisch im Reaktor auf eine aufwärts, in Richtung des Gasabzugs gerichtete Kreisbahn gezwungen und dadurch die Wirbelströmung bzw. Wirbel induziert.

Das Mehrphasengemisch strömt in der aufwärtsgerichteten Wirbelströmung in Richtung des Gasabzugs nach oben, wobei durch einen Zentrifugal- bzw. Flieh- sowie Schwerkrafteffekt die Flüssigkeitsmischung bzw. der Flüssigkeitsanteil, im Speziellen in Form von Flüssigkeitströpfchen, aus dem Mehrphasengemisch ausgeschieden bzw. abgetrennt werden.

Diese ausgeschiedenen Flüssigkeitströpfchen sinken schwerkraftbedingt im Reaktor nach unten und sammeln sich in einem unteren Bereich des Reaktors (Flüssigkeitsteil des Reaktors bzw. Flüssigkeitsraums) an.

Dort erfolgt dann durch Schwerkrafteinfluss die Phasentrennung der Flüssigkeitsphasen des sich ansammelnden bzw. des angesammelten Flüssigkeitsgemischs.

Das - während des in Wirbeln nach oben Steigens - um die Flüssigkeitströpfchen reduzierte "Mehrphasengemisch", d.h. das aus dem Mehrphasengemisch abgeschiedene Gas bzw. die abgetrennte Gasphase, sammelt sich in einem oberen Bereich des Reaktors an (Gasraum des Reaktors) und kann dort über den Gasabzug, insbesondere mittels einer Vakuumpumpe, aus dem Reaktor abgezogen werden.

In dem Flüssigkeitsraum des Reaktors werden sich in dem dort ansammelnden bzw. angesammelten Flüssigkeitsgemisch die zumindest zwei getrennten Flüssigkeitsphasen ausbilden, was in deren unterschiedlichen spezifischen Schweren bzw. Dichten begründet ist.

Eine spezifisch schwere Flüssigkeit, insbesondere Wasser oder ein homogenes Wassergemisch, setzt sich - als erste Flüssigkeitsphase, insbesondere Wasserphase - in einem unteren Bereich des Reaktors ab. Eine spezifisch leichtere, mit der spezifisch schwereren Flüssigkeit nicht mischbare Flüssigkeit, insbesondere eine ein organisches Lösungsmittel, wie Toluol, und Bitumen enthaltene Flüssigkeit, schwimmt auf dieser - als zweite Flüssigkeitsphase, insbesondere Ölphase, - auf.

Diese zumindest zwei, derart sich trennenden bzw. getrennten Flüssigkeitsphasen können über die entsprechend positionierten, neben dem Gasabzug mindestens zwei weiteren Abführungen, nämlich über eine zweite und eine dritte Abführung, aus dem Reaktor abgezogen werden.

Dazu sind erfindungsgemäß in vertikaler Richtung unterhalb des tangentialen Einlaufs bei dem Reaktor - in vertikal unterschiedlicher und der jeweiligen Flüssigkeitsphase angepasster bzw. entsprechender Höhe - die zweite Abführung, über welche die zweite Flüssigkeitsphase abgezogen werden kann, und - unterhalb der zweiten Abführung - die dritte Abführung, über welche die erste Flüssigkeitsphase abgezogen werden kann, angeordnet. Anders ausgedrückt, über die vertikal oberhalb der dritten Abführung angeordneten zweiten Abführung kann die zweite, spezifisch leichtere Flüssigkeit und über die vertikal unterhalb der zweiten Abführung angeordneten dritten Abführung kann die erste, spezifisch schwerere Flüssigkeit abgezogen werden.

Entsprechendes gilt natürlich auch für drei oder mehrere spezifisch unterschiedlich schwere, nicht mischbare Flüssigkeiten aus dem Mehrphasengemisch, für welche eine entsprechende Anzahl von Abführungen vorzusehen ist.

Bei dem erfindungsgemäßen Verfahren zur Phasentrennung eines solchen Mehrphasengemisches aus mindestens einer Gas- (Gasanteil) und zumindest zwei Flüssigkeitsphasen (Flüssigkeitsanteil) wird das Mehrphasengemisch in eine aufwärtsgerichtete Wirbelströmung versetzt.

Bei Durchströmung der aufwärtsgerichteten Wirbeln werden unter Flieh- und Schwerkrafteinfluss Flüssigkeitströpfchen aus dem Mehrphasengasgemisch ausgeschieden, wodurch der Flüssigkeitsanteil aus dem Mehrphasengemisch ausgeschieden bzw. abgetrennt wird. Das Mehrphasengemisch reduziert sich währenddessen zum Gas bzw. zur Gasphase. D.h., die Gasphase wird ausgebildet.

Die Flüssigkeitströpfchen werden gesammelt, wobei sich bei den gesammelten Flüssigkeitströpfchen unter Schwerkrafteinfluss die erste und die zweite Flüssigkeitsphase ausbilden.

Alle gebildeten Phasen werden getrennt voneinander abgezogen, wodurch das Mehrphasengemisch getrennt wird. D.h., die beiden ausgebildeten Flüssigkeitsphasen und die Gasphase werden jeweils getrennt abgezogen und dadurch das Mehrphasengemisch getrennt.

Anschaulich gesehen, nutzt damit die Erfindung grundlegende, einfach nutzbare, physikalische Effekte, d.h. die Fliehkraft und die Schwerkraft, um über deren Effekte in einfacher Weise Mehrphasengemische in die einzelnen Phasen aufzutrennen.

Auf Grund dieser einfach nutzbaren, physikalischen Effekte lässt sich eine einfache und kostengünstig zu realisierende Vorrichtung zur Phasentrennung eines Mehrphasengemisches realisieren und dadurch in einfacher, aber effizienter und effektiver Weise das Mehrphasengemisch mit hoher Reinheit trennen. Auch erreicht die Erfindung dadurch, dass eine Trennung insbesondere von hohen Volumenströmen an Mehrphasengemischen möglich ist.

Bevorzugte Weiterbildungen sind auch Gegenstand der abhängigen Ansprüche, welche sich sowohl auf die erfindungsgemäße Vorrichtung als auch auf das erfindungsgemäße Verfahren zur Phasentrennung des Mehrphasengemisches beziehen.

In einer bevorzugten Weiterbildung ist der Reaktor ein druckfester Kessel, dessen Druckfestigkeit entsprechend einem unter Druck stehenden und in den Kessel - zur Phasentrennung - eintretenden Mehrphasengemisch angepasst bzw. ausgelegt ist. Dabei kann das Mehrphasengemisch ein Filtrat aus einem Trommel-, Scheiben-, Pan-, Bandfiltern oder anderem kontinuierlichen Filter, insbesondere einem Dampf-(Druck-)Filter, sein.

In einer bevorzugten Weiterbildung ist der tangentiale Einlauf als tangentialer Einlaufstutzen ausgebildet. Dadurch kann das Mehrphasengemisch unter möglichst geringem Druckverlust in den Reaktor eintreten. D.h., vorzugsweise wird der Einlauf auf minimalen Druckverlust ausgelegt. Darüber hinaus erweist sich ein solcher tangentialer Einlaufstutzen dahingehend von Vorteil, als dass die Ausbildung der Wirbelströmung erleichtert wird.

Weiterhin kann in einer bevorzugten Weiterbildung vorgesehen sein, dass der Einlauf mit einem Tropfenabscheider versehen ist, welcher aus dem Mehrphasengemisch vor Eintritt in den Reaktor Flüssigkeitströpfchen abscheidet. Dadurch wird erreicht, dass das Mehrphasengemisch nicht zerstäubt oder als Spray in den Reaktor gelangt, wodurch die Phasentrennung erleichtert wird.

Auch kann vorgesehen sein, dass durch den tangentialen Einlauf, insbesondere durch den tangentialen Stutzen, das Mehrphasengemisch als Gesamtstrom, insbesondere eines Filters, oder als Teilströme, insbesondere aus einem Prozessbereich des Filters, in den Reaktor geführt wird.

Weiter kann auch vorgesehen sein, dass der Einlauf mit einem vorgebbaren vertikalen Abstand zu einer Flüssigkeitsoberfläche des sich im Reaktor angesammelten Flüssigkeitsanteils des Mehrphasengemisches angeordnet ist. Insbesondere kann hier vorgesehen sein, dass der Einlauf oberhalb der Mitte des Reaktors, insbesondere in ca. 2/3 Höhe des Reaktors, angeordnet ist.

In einer weiteren bevorzugten Weiterbildung ist vorgesehen, dass der Gasabzug als tangentialer (Abzugs-)Stutzen ausgebildet ist. Dadurch kann die Gasphase bzw. das Gas unter möglichst geringem Druckverlust aus dem Reaktor austreten. D.h., vorzugsweise wird der Gasabzug - wie auch der Einlauf - auf minimalen Druckverlust ausgelegt.

Darüber hinaus erweist sich ein solcher tangentialer (Abzugs-)Stutzen dahingehend von Vorteil, als dass die Ausbildung der Wirbelströmung erleichtert wird. Vereinfacht ausgedrückt, vorzugsweise findet der Abzug der Gasphase ebenfalls tangential statt, um eine definierte Wirbelströmung im Gasraum des Reaktors zu erzeugen.

In einer weiteren bevorzugten Weiterbildung ist vorgesehen, dass der Gasabzug vertikal oberhalb des Einlaufs wie auch vertikal deutlich oberhalb der Flüssigkeitsoberfläche im Reaktor angebracht ist.

Auch kann bevorzugt vorgesehen sein, dass die Gasphase bzw. das Gas mittels einer Vakuumpumpe aus dem Reaktor abgezogen wird. Dadurch wird die Abtrennung der Gasphase aus dem Mehrphasengemisch erleichtert.

In einer bevorzugten Weiterbildung ist vorgesehen, dass die dritte Abführung, d.h. die Abführung für die erste, spezifisch schwerere Flüssigkeit, in einem unteren Viertel des Reaktors, insbesondere in einem Bereich nahe eines Bodens des Reaktors, positioniert ist. Dadurch wird erreicht, dass die erste, spezifisch schwerere Flüssigkeit mit einer hohen Reinheit abgezogen werden kann.

Aus Einfachheitsgründen kann die dritte Abführung als Abzugsstutzen ausgebildet sein.

Auch kann vorgesehen sein, den Abzug der ersten Flüssigkeitsphase bzw. der ersten Flüssigkeit mittels einer Abzugspumpe, insbesondere mittels einer geregelten Abzugspumpe, auszuführen.

Auch kann vorgesehen sein, dass der Reaktor einen gewölbten Boden, insbesondere Klöpperboden oder Korbbogenboden, aufweist, um dort Feststoffe und/oder Partikel, beispielsweise aus einem Trübstoß, anzusammeln. Weiter bevorzugt ist die dritte Abführung dann vertikal oberhalb des Bodens positioniert.

In einer weiteren bevorzugten Weiterbildung ist vorgesehen, dass die zweite Abführung, d.h. die Abführung für die zweite, spezifisch leichtere Flüssigkeit, in einer unteren Hälfte der spezifisch leichteren Flüssigkeitsschicht, insbesondere im unteren Drittel der spezifisch leichteren Flüssigkeitsschicht, positioniert ist.

Das spezifisch leichtere Fluid der Flüssigkeitsmischung - im Falle von zwei nicht mischbaren Flüssigkeiten - positioniert sich nämlich im Reaktor zwischen der Gasphase und der spezifisch schwereren Flüssigkeit. Ein gesamter Volumenstrom an spezifisch schwererer Flüssigkeit muss durch diese Schicht des spezifisch leichteren Fluids transportiert werden. Im Bereich der Phasengrenze zur Gasphase, an der beide Flüssigkeiten abgeschieden werden, wird eine deutliche Durchmischung erwartet. Daher kann bei Positionierung der zweiten Abführung, wie bevorzugt vorgesehen, die zweite Flüssigkeitsphase bzw. die zweite Flüssigkeit mit höherer Reinheit abgezogen werden.

Die Reinheit der abgezogenen zweiten Flüssigkeit kann weiter erhöht werden, wenn die zweite Abführung, beispielsweise auch ein Stutzen, in den Reaktor hinein verlängert ist, so dass der Abzug der zweiten Flüssigkeitsphase aus einer zentralen Koordinate der zweiten Flüssigkeit erfolgt.

"Hinein" verlängert kann dabei im Fall von zylindrischen Reaktoren als "radial nach innen" verstanden werden. Im Falle einer geraden Wand des Reaktors kann als "hinein" verlängert eine lotrecht zur Wand gerichtete Verlängerung verstanden werden.

Weiter bevorzugt kann vorgesehen sein, dass oberhalb einer Öffnung der zweiten Abführung, insbesondere oberhalb einer Stutzenöffnung, eine Abdeckung, beispielsweise ähnlich einer Haube oder Glocke, angeordnet wird. Eine solche nach unten offene Abdeckung bewirkt, dass die zweite Flüssigkeitsphase bzw. die zweite Flüssigkeit nur von unterhalb der Abführungsöffnung abgezogen wird, und so eine höhere Reinheit der abgezogenen zweiten, spezifisch leichteren Flüssigkeit erreicht wird.

Auch kann vorgesehen sein, den Abzug der zweiten Flüssigkeitsphase bzw. der zweiten Flüssigkeit mittels einer Abzugspumpe, insbesondere mittels einer geregelten Abzugspumpe, auszuführen.

Die Phasentrennung des Mehrphasengemisches kann verbessert werden, d.h. ein Fehleraustrag bei Trennen des Mehrphasengemisches reduziert werden, wenn der Abzug der mindestens zwei Flüssigkeitsphasen bzw. Flüssigkeiten geregelt erfolgt. Wird beispielsweise der Abzug der Flüssigkeiten mittels Abzugspumpen realisiert, so ist es vorteilhaft, den Pumpenabzug der Flüssigkeiten bzw. die Abzugspumpen zu regeln.

Hierzu kann es auch zweckmäßig sein, Messsensoren - zu einer Detektion einer Phasengrenze - im Bereich der jeweiligen angestrebten Lagen der Phasengrenzen zu positionieren, welche Lagen jeweils minimale, optimale und maximale Lage der Phasengrenze definieren, um über die Regelung des Abzugs die Phasengrenze immer optimal zu halten.

Als Sensoren können Leitfähigkeitssensoren, insbesondere elektrische oder thermische Leitfähigkeitssensoren, kapazitive Sensoren und/oder optische Sensoren zur Anwendung kommen.

Besonderes bevorzugt lässt sich die Erfindung bei einem Mehrphasengemisch aus einer - kombinierten - Waschung und Dampf-(Druck-)Filtration von Ölsand, beispielsweise bei einem Kuchenbildungs-, Wasch- und Entfeuchtungsfiltrat einsetzen. Dabei weist dieses Filtrat ein Gemisch aus einem organischen Lösungsmittel mit Bitumen und einem - mit dem organischen Lösungsmittel mit Bitumen nicht mischbaren - Wasser (Flüssigkeitsanteil mit erster und zweiter Flüssigkeitsphase bzw. Wasser- und Ölphase) sowie Luft (Gasphase) auf.

Da das Wasser das im Vergleich zum organischen Lösungsmittel spezifisch schwerere Fluid ist, wird sich die Wasserphase unterhalb der Ölphase ausbilden und kann über die dritte Abführung abgezogen werden. Die Ölphase kann über die zweite Abführung abgezogen werden, die Gasphase wird über den Gasabzug abgeführt.

Die Erfindung lässt sich bevorzugt bei Trommel-, Scheiben-, Pan-, Bandfiltern oder weiteren kontinuierlichen Filtern einsetzen, um dort das kontinuierlich anfallende Filtrat, d.h. das Mehrphasengemisch, unmittelbar und kontinuierlich durch Trennung nach der Erfindung aufzuarbeiten.

Insbesondere kann vorgesehen sein, die bei der Phasentrennung des Mehrphasengemisches mit höherer Reinheit anfallenden Trennprodukte, d.h. das mindestens eine Gas bzw. die zumindest zwei Flüssigkeiten, weiterzuverwenden.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- FIG 1: einen Filtratabscheider gemäß einem Ausführungsbeispiel der Erfindung,
- FIG 2: einen erfindungsgemäßen Verfahrenablauf eines Verfahrens zur Phasentrennung eines Kuchenbildungs-, Wasch- und Entfeuchtungsfiltrats eines kontinuierlichen Dampf-Filterapparats und
- FIG 3: eine Prinzipdarstellung eines Abscheidens von Flüssigkeitströpfchen aus einem Mehrphasengemisch gemäß einer Ausführungsform der Erfindung.

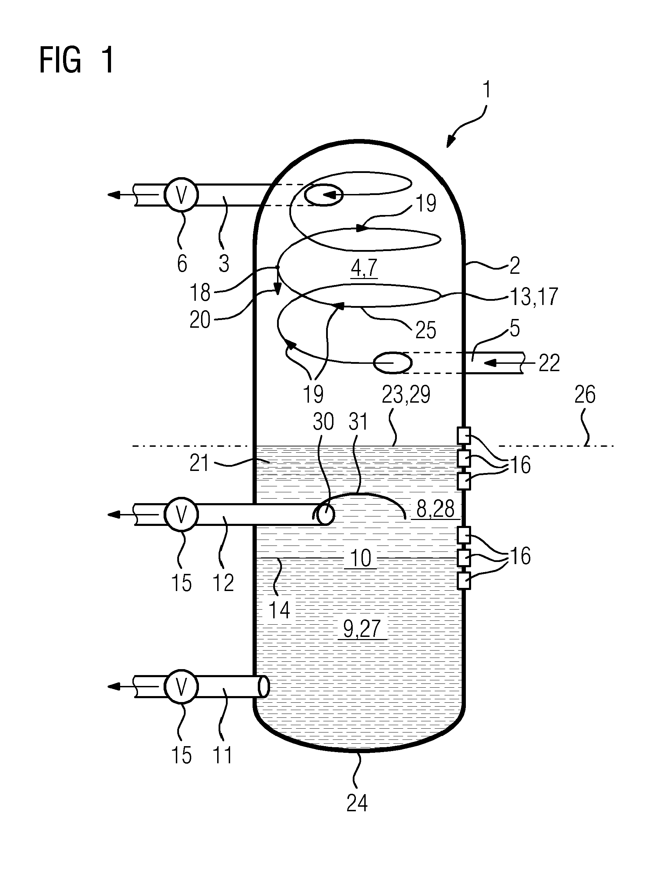

FIG 1 zeigt einen Filtratabscheider 1 zur Phasentrennung eines Kuchenbildungs-, Wasch- und Entfeuchtungsfiltrats 22 bei einem kontinuierlichen Dampf-Filterapparat, wie er beispielsweise bei der Dampf-(Druck-)Filtration von Ölsand verwendet wird.

Bei einer gleichzeitigen Waschung und Dampf-(Druck-) Filtration durch einen solchen Dampf-Filterapparat, beispielsweise in Ausgestaltung eines Drehfilters, kommen zwei nicht mischbare Flüssigkeiten zum Einsatz, die sich als Flüssigkeitsmischung im Filtrat 22 wiederfinden. Die Quelle der nicht mischbaren Flüssigkeiten sind Mutterflüssigkeit bzw. Mutterfiltrat, Waschflüssigkeit und Kondensat.

Im Filtratabscheider 1 des Dampf-Filterapparats wird es daher - bei dem Filtrat 22 - zu einem Mehr- bzw. Dreiphasengemisch 22 aus Flüssigkeitsmischung einerseits sowie Luft andererseits kommen.

Im Fall der Dampf-(Druck-)Filtration von Ölsand wird sich so das Filtrat als Dreiphasengemisch aus einem Flüssigkeitsanteil aus organischem Lösungsmittel, wie Toluol, und Bitumen, einem weiteren Flüssigkeitsanteil aus Wasser sowie einem Gasanteil aus Luft zusammensetzen.

Dieses Filtrat 22 wird dem Filtratabscheider 1 zugeführt und dort getrennt.

Der Filtratabscheider 1 setzt sich wie FIG 1 zeigt aus einem zentralen Behälter bzw. Kessel 2 mit entsprechend positionierten Zufuhr- 5 und Abzugsstutzen 3, 11, 12 zusammen.

Wie FIG 1 zeigt, weist der Kessel 2 des Filtratabscheiders 1 einen Zufuhrstutzen 5 oberhalb der Mitte 26 des Kessels 2, hier in ca. 2/3 Höhe des Kessels 2, auf. Durch diesen Zufuhrstutzen 5 wird das Filtrat 22, als Gesamtstrom des Filters des Dampf-Filterapparats oder als Teilströme aus einem Prozessbereich des Filters des Dampf-Filterapparats, in den Kessel 2 des Filtratabscheiders 1 geführt.

Der Zufuhrstutzen 5 ist als tangentialer Stutzen 5 mit einem möglichst geringen Druckverlust ausgeführt und mit einem Tropfenabscheider (nicht dargestellt) kombiniert.

Oberhalb des Zufuhrstutzens 5 und deutlich oberhalb einer Flüssigkeitsoberfläche 23 im Filtratabscheider 1 ist der - ebenfalls auf minimalem Druckverlust ausgelegte - tangentiale Abfuhrstutzen 3 bzw. Gasabzug 3 für die (abgetrennte) Gasphase 7 des Dreiphasengemisches 22 angebracht.

Der Abzug der Gasphase 7 findet ebenfalls tangential statt, um eine definierte Wirbelströmung 13 im Gasraum 4 des Filtratabscheiders 1 zu erzeugen.

Durch die Positionierung des tangentialen Abfuhrstutzens 3 für die Gasphase 7 vertikal oberhalb des tangentialen Zufuhrstutzens 5 wird das in den Kessel 2 eintretende Dreiphasengemisch 22 im Kessel 2 auf eine aufwärts, in Richtung des Abzugsstutzens bzw. Gasabzugs 3 gerichtete Kreisbahn 25 gezwungen und dadurch die Wirbelströmung 13 bzw. Wirbel 17 induziert.

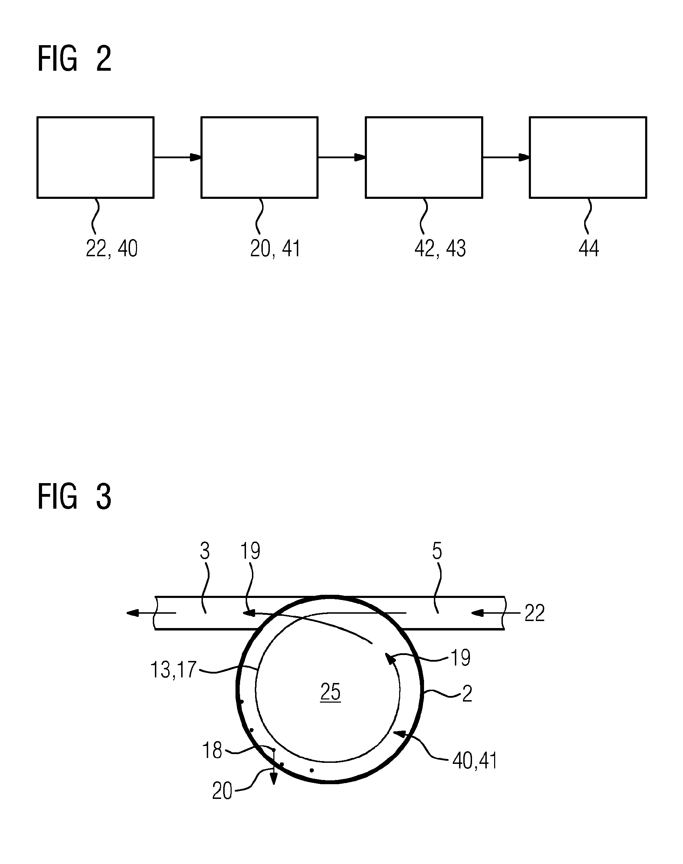

FIG 3 zeigt in einer Prinzipdarstellung schematisch einen Ausschnitt dieser Wirbelströmung 13 im Kessel 2.

Das Dreiphasengemisch 22 strömt - wie in den FIGen 1 und 3 verdeutlicht ist - bei Eintritt in den Kessel 2 über den tangentialen Zuführstutzen 5 in der aufwärtsgerichteten Wirbelströmung 13 in Richtung 19 des Gasabzugs 3 zum Gasabzug 3 nach oben, wobei durch einen Zentrifugal- bzw. Flieh- sowie Schwerkrafteffekt die Flüssigkeitsmischung 18 in Form von Flüssigkeitströpfchen 18 aus dem Mehrphasengemisch 22 ausgeschieden bzw. abgetrennt werden 20.

Diese ausgeschiedenen Flüssigkeitströpfchen 18 sinken schwerkraftbedingt im Kessel 2 nach unten und sammeln sich in einem unteren Bereich des Kessels 2, d.h. im Flüssigkeitsraum 10 des Kessels, an.

Das - während des in Wirbeln 17 nach oben Steigens - um die Flüssigkeitströpfchen 18 reduzierte "Dreiphasengemisch", d.h. das aus dem Dreiphasengemisch 22 abgeschiedene Gas bzw. die abgetrennte Gasphase 7, sammelt sich in einem oberen Bereich des Kessels 2, d.h. im Gasraum 4 des Kessels 2, an und wird dort über den Gasabzug 3 mittels einer Vakuumpumpe 6 aus dem Kessel 2 abgezogen.

Im Flüssigkeitsraum 10 des Filtratabscheiders 1 kommt es zur Phasentrennung der beteiligten, nicht mischbaren Flüssigkeiten.

Die spezifisch schwerere, nicht mischbare Flüssigkeit 27, hier Wasser 27, setzt sich, hier als erste Flüssigkeitsphase 9 bzw. Wasserphase 9, ab; die spezifisch leichtere, nicht mischbare Flüssigkeit 28, hier das organische Lösungsmittel mit Bitumen 28, schwimmt auf dieser, hier als zweite Flüssigkeitsphase 8 bzw. Ölphase 8, auf.

Wie FIG 1 zeigt, ist im unteren Viertel des Filtratabscheiders 1, vorzugsweise im Bereich nahe dem Filtratabscheiderboden 24, der Abzugsstutzen 11 für das spezifisch schwerere Fluid 27 positioniert. Der Abzug des spezifisch schwereren Fluids 27 erfolgt mittels einer mit dem Abzugsstutzen 11 kombinierten Abzugspumpe 15.

Das spezifisch leichtere Fluid 28 positioniert sich im Filtratabscheider 1 zwischen Gasphase 7 und spezifisch schwererer Flüssigkeit 27 bzw. der Wasserphase 9, wodurch der gesamte Volumenstrom an spezifisch schwererer Flüssigkeit 27 durch diese Schicht 8 transportiert werden muss.

Im Bereich der Phasengrenze 29 zur Gasphase 7, an der beide Flüssigkeiten 27, 28 abgeschieden werden, wird eine deutliche Durchmischung (Mischbereich 21) von spezifisch leichterem 28 und spezifisch schwererem 27 Fluid erwartet.

Der Abzugsstutzen 12 für das spezifisch leichtere Fluid 28 ist aus diesem Grund in der unteren Hälfte der spezifisch leichteren Flüssigkeitsschicht 8 positioniert, vorzugsweise wie FIG 1 zeigt, im unter Drittel dieser Schicht 8.

Der Abzugsstutzen 12 für das spezifisch leichtere Fluid 28 ist, wie FIG 1 zeigt, in den Kessel 2 des Filtratabscheiders 1 verlängert, sodass der Abzug des spezifisch leichteren Fluids 28 aus deren zentralen Koordinate erfolgt.

Oberhalb einer Abzugsöffnung 30 dieses Abzugsstutzen 12 für das spezifisch leichtere Fluid 28 ist eine Abdeckung 31 in Form einer Haube 31 angeordnet, die dazu führt, dass die spezifisch leichtere Flüssigkeit 28 nur von unterhalb der Abzugsöffnung 30 abgezogen wird.

Dadurch wird eine höhere Reinheit der abgezogenen spezifisch leichteren Flüssigkeit 28 erreicht. Der Abzug des spezifisch leichteren Fluids 28 erfolgt ebenfalls mittels einer mit dem Abzugsstutzen 12 kombinierten Abzugspumpe 25.

Der Abzug der derart getrennten Flüssigkeiten 27, 28 erfolgt, wie auch der Abzug der Gasphase 7, mittels der Abzugspumpen 15 bzw. der Vakuumpumpe 6 geregelt, wodurch ein kontinuierlicher Betrieb des Filtratabscheiders 1 gewährleistet werden kann.

Dazu sind am Kessel 2 des Filtratabscheiders 1 im Bereich der jeweils angestrebten Phasengrenzen 14, 29 Messsensoren 16 angeordnet, die jeweils eine minimale, optimale und maximale Lage der jeweiligen Phasengrenze 14, 29 definieren. Als Messsensoren 16 sind hier elektrische Leitfähigkeitssensoren 16 eingesetzt.

Der Abzug der Flüssigkeiten 27, 28 ist derart geregelt, dass - bei entsprechend abgezogener Flüssigkeitsmenge der jeweiligen Flüssigkeit 27, 28 - die entsprechende Phasengrenze 14, 29 immer in etwa in ihrer optimalen Lage gehalten bzw. eingestellt wird.

FIG 2 verdeutlicht im Detail einzelne Schritte bzw. Phasen, wie sie bei der Phasentrennung des Mehrphasengemisches bzw. des Kuchenbildungs-, Wasch- und Entfeuchtungsfiltrats 22 ausgeführt werden.

So verdeutlicht FIG 2 wie das Mehrphasengemisch 22 in eine aufwärtsgerichtete Wirbelströmung 13 versetzt wird 40, wobei bei Durchströmung 19 von aufwärtsgerichteten Wirbeln 17 der Wirbelströmung 13 die Flüssigkeitströpfchen 18 aus dem Mehrphasengasgemisch 22 ausgeschieden werden 20 und dabei die getrennte Gasphase 7 des Mehrphasengemisches 22 ausgebildet wird 41.

Die Flüssigkeitströpfchen 18 werden gesammelt 42, wobei sich bei den gesammelten Flüssigkeitströpfchen 18 unter Schwerkrafteinfluss eine erste und eine zweite Flüssigkeitsphase 8, 9 ausbilden 43.

Alle gebildeten Phasen 7, 8, 9 werden getrennt voneinander abgeführt 44, wodurch das Mehrphasengemisch 22 getrennt wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung zur Phasentrennung eines Mehrphasengemisches (22) mit zumindest einer Gas- (7) und mindestens zwei Flüssigkeitsphasen (8, 9) mit einem Reaktor (2),
- welcher einen tangentialen Einlauf (5) aufweist, über welchem das Mehrphasengemisch (22) dem Reaktor (2) zuführbar ist,
- welcher einen vertikal oberhalb des Einlaufs (5) angeordneten Gasabzug (3) aufweist, über welchem eine aus dem Mehrphasengemisch (22) abgetrennte Gasphase (7) des Mehrphasengemisches (22) aus dem Reaktor (2) abführbar ist, und
- welcher mindestens zwei vertikal unterhalb des Einlaufs (5), in unterschiedlichen vertikalen Höhen angeordnete Abführungen (11, 12) aufweist, über welche jeweils eine der mindestens zwei aus dem Mehrphasengemisch (22) abgetrennte Flüssigkeitsphasen (8, 9) des Mehrphasengemisches (22) aus dem Reaktor (2) abführbar ist.

2. Vorrichtung zur Phasentrennung eines Mehrphasengemisches (22) nach mindestens einem der voranstehenden Ansprüche, **dadurch gekennzeichnet, dass** der tangentiale Einlauf (5) als tangentialer Stutzen und/oder der Gasabzug (3) als tangentiale Stutzen ausgebildet sind bzw. ist.

3. Vorrichtung zur Phasentrennung eines Mehrphasengemisches (22) nach mindestens einem der voranstehenden Ansprüche, **dadurch gekennzeichnet, dass** der Einlauf (5) oberhalb der Mitte des Reaktors (2), insbesondere in ca. 2/3 Höhe des Reaktors (2) positioniert ist.

4. Vorrichtung zur Phasentrennung eines Mehrphasengemisches (22) nach mindestens einem der voranstehenden Ansprüche, **dadurch gekennzeichnet, dass** der Einlauf (5) mit einem Tropfenabscheider kombiniert ist.

5. Vorrichtung zur Phasentrennung eines Mehrphasengemisches (22) nach mindestens einem der voranstehenden Ansprüche, **dadurch gekennzeichnet, dass** der Gasabzug (3) nahe oder unmittelbar an einem oberen Ende des Reaktors (2) angeordnet ist und/oder dass der Gasabzug (3) vertikal deutlich oberhalb einer Flüssigkeitsoberfläche (23) im Reaktor (2) positioniert ist.

6. Vorrichtung zur Phasentrennung eines Mehrphasengemisches (22) nach mindestens einem der voranstehenden Ansprüche, **dadurch gekennzeichnet, dass** der Gasabzug (3) mit einer Vakuumpumpe (6) kombiniert ist, mittels welcher die Gasphase (7) aus dem Reaktor (2) abführbar ist.

7. Vorrichtung zur Phasentrennung eines Mehrphasengemisches (22) nach mindestens einem der voranstehenden Ansprüche, **dadurch gekennzeichnet, dass** die unterschiedlichen vertikalen Höhen der mindestens zwei Abführungen (11, 12) an die jeweiligen vertikalen Höhe der Flüssigkeitsphasen (8, 9) angepasst sind.

8. Vorrichtung zur Phasentrennung eines Mehrphasengemisches (22) nach mindestens einem der voranstehenden Ansprüche, **dadurch gekennzeichnet, dass** das Mehrphasengemisch (22) zwei Flüssigkeitsphasen (8, 9) aufweist, welche zwei Flüssigkeitsphasen (8, 9) durch nicht mischbare, spezifisch unterschiedlich schwere Fluide (27, 28) gebildet werden.

9. Vorrichtung zur Phasentrennung eines Mehrphasengemisches (22) nach mindestens dem voranstehenden Anspruchs, **dadurch gekennzeichnet, dass** eine Abführung (11) für das spezifisch schwerere Fluid (27) in einem unteren Viertel des Reaktors (2), insbesondere in einem Bereich nahe eines Bodens (24) des Reaktors (2), positioniert ist und/oder eine Abführung (12) für das spezifisch leichtere Fluid (28) in einer unteren Hälfte einer durch das spezifisch leichtere Fluid (28) in dem Reaktor (2) ausgebildeten Flüssigkeitsschicht (8), insbesondere in einem unteren Drittel dieser Flüssigkeitsschicht (8), positioniert ist.

10. Vorrichtung zur Phasentrennung eines Mehrphasengemisches (22) nach mindestens einem der voranstehenden Ansprüche, **dadurch gekennzeichnet, dass** der Reaktor (2) einen gewölbten Boden, insbesondere einen Klöpperboden oder einen Korbbogenboden, aufweist.

11. Vorrichtung zur Phasentrennung eines Mehrphasengemisches (22) nach mindestens einem der voranstehenden Ansprüche, **dadurch gekennzeichnet, dass** eine Abführung (11, 12) eine Abzugspumpe (15) aufweist, unter Verwendung derer eine Flüssigkeitsphase (8, 9) abführbar ist.

12. Vorrichtung zur Phasentrennung eines Mehrphasengemisches (22) nach mindestens einem der voranstehenden Ansprüche, **dadurch gekennzeichnet, dass** eine Abführung (11, 12) ein radial in den Reaktor (2) hinein verlängerter Stutzen ist, insbesondere dessen Abführungsöffnung (30) eine Abdeckung (31) aufweist.

13. Vorrichtung zur Phasentrennung eines Mehrphasengemisches (22) nach mindestens einem der voranstehenden Ansprüche, **dadurch gekennzeichnet, dass** eine (8) der mindestens zwei Flüssigkeitsphasen (8, 9) eine Flüssigkeit aus organischem Lösungsmittel und Bitumen, und/oder eine weitere (9) der mindestens zwei Flüssigkeitsphasen (8, 9) eine Flüssigkeit aus Wasser und/oder die zumindest eine Gasphase (7) Luft sind/ist.

14. Vorrichtung zur Phasentrennung eines Mehrphasengemisches (22) nach mindestens einem der voranstehenden Ansprüche, **dadurch gekennzeichnet, dass** der Reaktor (2) Messsensoren (16) zur Detektion einer Phasengrenze (14, 29) aufweist, insbesondere dass der Reaktor (2) mehrere solcher Messsensoren (16) aufweist, die im Bereich einer minimalen, optimalen und maximalen Lage einer Phasengrenze (14, 29) positioniert sind.

15. Vorrichtung zur Phasentrennung eines Mehrphasengemisches (22) nach mindestens einem der voranstehenden Ansprüche, mit einer Regelung der Abführungen der mindestens zwei Flüssigkeitsphasen (8, 9) des getrennten Mehrphasengemisches (22) aus dem Reaktor (2), insbesondere unter Verwendung geregelter Abzugspumpen (15), wobei bei der Regelung zumindest eine Phasengrenzen (14, 29) zwischen zwei Phasen (7, 8, 9) des in dem Reaktor (2) getrennten Mehrphasengemisches (22) auf einem vorgebaren Niveau einstellbar ist und/oder gehalten wird.

16. Vorrichtung zur Phasentrennung eines Mehrphasengemisches (22) nach mindestens einem der voranstehenden Ansprüche, eingesetzt bei einer gleichzeitigen Waschung und Dampf-(Druck-)Filtration von Ölsand zur Phasentrennung des dabei gebildeten Kuchenbildung-, Wasch- und Entfeuchtungsfiltrats (22), wobei das dabei gebildete Kuchenbildung-, Wasch- und Entfeuchtungsfiltrat (22) als Mehrphasengemisch (22) mittels der Vorrichtung zur Phasentrennung eines Mehrphasengemisches (22) getrennt wird.

17. Verfahren zur Phasentrennung eines Mehrphasengemisches (22) mit zumindest einer Gas- (7) und mindestens zwei Flüssigkeitsphasen (8, 9),
- bei dem das Mehrphasegemisch (22) in eine aufwärtsgerichtete Wirbelströmung (13) versetzt wird (40), wobei bei Durchströmung von aufwärtsgerichteten Wirbeln (17) der Wirbelströmung (13) Flüssigkeitströpfchen (18) aus dem Mehrphasengasgemisch (22) ausgeschieden werden und dabei die getrennte Gasphase (7) des Mehrphasengemisches (22) ausgebildet wird (41),
- bei dem die Flüssigkeitströpfchen (18) gesammelt werden (42), wobei sich bei den gesammelten Flüssigkeitströpfchen (18) unter Schwerkrafteinfluss eine erste und eine zweite Flüssigkeitsphase (8, 9) ausbilden (43),
- bei dem alle gebildeten Phasen (7, 8, 9) getrennt voneinander abgeführt werden (44), wodurch das Mehrphasengemisch (22) getrennt wird.

18. Verfahren zur Phasentrennung eines Mehrphasengemisches (22) nach mindestens einem der voranstehenden Verfahrensansprüchen durchgeführt mit einer Vorrichtung zur Phasentrennung eines Mehrphasengemisches (22) nach mindestens einem der voranstehenden Vorrichtungsansprüche.

19. Verfahren zur Phasentrennung eines Mehrphasengemisches (22) nach mindestens einem der voranstehenden Ansprüchen eingesetzt zur Phasentrennung eines Filtrats (22) aus einem Trommel-, Scheiben-, Pan- oder Bandfilter oder aus einem anderen kontinuierlichen Filter, insbesondere aus einem Dampf-(Druck-)Filter.

20. Verfahren zur Phasentrennung eines Mehrphasengemisches (22) nach mindestens einem der voranstehenden Ansprüche, eingesetzt zur Phasentrennung eines Kuchenbildungs-, Wasch- und Entfeuchtungsfiltrats (22) bei einem kontinuierlichen Dampf-(Druck-)Filterapparat.

21. Verfahren zur Phasentrennung eines Mehrphasengemisches (22) nach mindestens einem der voranstehenden Verfahrensansprüche, eingesetzt zur Phasentrennung eines Filtrats (22) mit zumindest einer Gasphase (7), insbesondere enthaltend Luft, und mindestens einer ersten, spezifisch schwereren Flüssigkeitsphase (9), insbesondere enthaltend Wasser, und einer zweiten, spezifisch leichteren Flüssigkeitsphase (8), insbesondere enthaltend ein organisches Lösungsmittel und Bitumen.
